# FASCICULE DE BREVET EUROPEEN

(11) **EP 0 418 348 B1**
(45) Date de publication et mention de la délivrance du brevet: **29.06.1994**
(21) Numéro de dépôt: 90904641.9
(22) Date de dépôt: 02.03.1990
(51) Int. Cl.: C08G 81/02, C08G 77/445, C08G 77/442, C08F 283/02

(54) **POLYMERES MODIFIES A BASE DE POLYESTER GREFFE ET SON PROCEDE DE PREPARATION**
MODIFIZIERTE POLYMERE AUF DER BASIS GEPFROPFTER POLYESTER UND VERFAHREN ZU DEREN HERSTELLUNG
MODIFIED POLYMERS BASED ON A GRAFTED POLYESTER AND PROCESS FOR PREPARATION THEREOF

(30) Priorité: 08.03.1989 FR 8903268
(43) Date de publication de la demande: 27.03.1991
(73) Titulaire: RHONE-POULENC CHIMIE, 92408 Courbevoie Cédex (FR)
(72) Inventeur: CANIVENC, Edith, F-69008 Lyon (FR); FIARD, Jean-François, F-75020 Paris (FR); FLEURY, Etienne, F-69008 Lyon (FR)
(74) Mandataire: Vignally, Noel
(86) Numéro de dépôt international: FR9000145
(87) Numéro de publication internationale: WO9010665

(56) Documents cités:
- EP-A- 0 279 134
- EP-A- 0 281 718
- EP-A- 0 333 547

## Description

La présente invention a pour objet des polymères modifiés à base de polyester sulfoné hydrodispersable greffé par des motifs copolymères dérivés de monomères vinyliques et d'un organopolysiloxane éthyléniquement insaturé, le procédé de préparation desdits polymères modifiés et leur application à la préparation de revêtements anti-adhésifs.

Selon l'invention les polymères modifiés sont à base d'un polyester greffé comprenant :
- un tronc dérivé d'un polyester sulfoné hydrodispersable
- et des greffons constitués de motifs copolymères derivés d'au moins un monomère vinylique et d'au moins un organopolysiloxane éthyléniquement insaturé soluble dans ledit ou lesdits monomère(s) vinylique(s).

Les polyesters sulfonés hydrodispersables pouvant constituer le tronc sont des produits connus. Ils peuvent être préparés par co-condensation d'un diacide organique (tel qu'un diacide aliphatique saturé ou insaturé, un diacide aromatique, un diacide présentant plusieurs noyaux aromatiques, un diacide arylaliphatique), l'un de ses diesters ou son anhydride et d'un diacide organique sulfoné ou l'un de ses diesters avec un diol, en présence d'un catalyseur habituel de polyestérification tel que l'orthotitanate de tétraisopropyle.

Comme monomères de départ couramment utilisés pour la préparation des polyesters sulfonés, hydrodispersables, on peut citer en tant que :
- diacides organiques : les diacides aliphatiques saturés ou insaturés, les diacides aromatiques, tels que les acides succinique, adipique, subérique, sébacique, les acides maléique, fumarique, itaconique, les acides orthophtalique, isophtalique, téréphtalique, les anhydrides de ces acides et leurs diesters comme les diesters méthyliques, éthyliques, propyliques, butyliques. Les composés préférés sont l'acide adipique, les acides orthophtalique, isophtalique, téréphtalique ;
- diacides organiques sulfonés : les diacides sulfonates de sodium ou leurs diesters tels que les dialcoylisophtalates et dialcoylsulfosuccinates comme le diméthylisophtalate-5 sulfonate de sodium ou le diméthylsulfosuccinate de sodium ;
- diols : les glycols aliphatiques tels que l'éthylèneglycol, le diéthylèneglycol, le dipropylèneglycol et les homologues supérieurs, le butanediol - 1, 4, l'hexanediol-1,6, le néopentylglycol et les glycols cyclaniques tels que le cyclohexanediol, le dicyclohexanediolpropane. Les diols choisis préférentiellement sont l'éthylèneglycol et le diéthylèneglycol.

Les polyesters sulfonés hydrodispersables préférés sont ceux qui ont une masse moléculaire moyenne en nombre comprise entre 10.000 et 35.000, un indice d'acide inférieur à 5 mg de KOH/g, un taux de soufre compris entre 0,8 et 2 % en poids, de préférence entre 1,2 et 1,8 %.

Parmi les monomères vinyliques dont peuvent dériver les motifs copolymères constituant les greffons, on peut citer :
- les esters monoéthyléniquement insaturés d'acides carboxyliques (acétate, propionate, butyrate, stéarate, benzoate ... de vinyle)
- les esters saturés et amides d'acides carboxyliques monoéthyléniquement insaturés (acrylates ou méthacrylates d'alkyle en C₁-C₂₀ tels que méthyle, heptyle, propyle, heptadecanyle ..., acrylamide, méthacrylamide ...)
- les nitriles monoéthyléniquement insaturés (acrylonitrile, méthacrylonitrile...)
- les acides carboxyliques monoéthyléniquement insaturés (acide acrylique, méthacrylique, itaconique, maléïque ...)
- les hydroxyalkyl- ou aminoalkyl- esters d'acides carboxyliques monoéthyléniquement insaturés (acrylate d'hydroxyethyle, hydroxypropyle... méthacrylate de 2-aminoéthyle ...)
- les monomères vinylaromatiques (styrène, vinyltoluène ...)

De faibles quantités (0 à 5 %, de préférence 0 à 3 % par rapport au(x) monomères(s) vinylique(s) de monomères réticulants (divinylbenzène, phtalate de diallyle, diacrylate d'éthylène glycol, méthylène bis-méthacrylamide, N-méthylolacrylamide...) peuvent également être présentes.

Les organopolysiloxanes éthyléniquement insaturés dont dérivent les motifs copolymères constituant les greffons peuvent être représentés par la formule moyenne suivante :

R''R'RSiO (SiRR'''O)ₘ (SiRR''''O)ₙ SiRR'R''

formule dans laquelle
. les symboles R sont identiques ou différents et représentent un radical alkyle en C₁-C₄, phényle, trifluoro-3, 3, 3 propyle
. les symboles R' sont identiques ou différents et représentent R ou un radical vinyle
. les symboles R'' sont identiques ou différents et représentent R ou un radical OH
. les symboles R''' sont identiques ou différents et représentent R, un radical vinyle ou un motif -r-X où r représente un radical organique bivalent et X un groupe éthyléniquement insaturé
. les symboles R'''' sont identiques ou différents et représentent R''' ou un motif -r'-X' où r' représente un radical organique bivalent et X' un groupe fonctionnel non éthyléniquement insaturé
. au moins 60 % des radicaux représentés par R, R' et R'' sont des radicaux méthyles
. les symboles m et n peuvent être nuls séparément, R' et/ou R'''' représentant un radical vinyle si m est nul, et ont une valeur suffisante pour assurer une viscosité du polymère de l'ordre de 20 mPas à 10.000.000 mPas à 25°C, de préférence de l'ordre de 50 à 7.000.000 mPas.

Comme exemple de motifs diorganosiloxy dans lesquels R''' et R'''' représentent R ou un radical vinyle, on peut citer
(CH₃)₂SiO ; CH₃(CH₂=CH)SiO ; CH₃(C₂H₅)SiO ; CH₃(C₆H₅)SiO ;
(C₆H₅)₂SiO ; CF₃CH₂CH₂(CH₃)SiO.

Parmi les motifs triorganosiloxy bloqueurs, on peut citer ceux de formule suivante :
(CH₃)₃SiO_{0,5} ; (CH₃)₂CH₂=CHSiO_{0,5} ; (CH₃)₂C₆H₅SiO_{0,5} ; CH₃(C₆H₅)₂SiO_{0,5}; ; CH₃(CH₂=CH)C₆H₅SiO_{0,5} ;CH₂=CH(C₆H₅)SiO_{0,5} ; (C₆H₅)₃SiO_{0,5}.

Parmi les radicaux organiques divalents r et r' pouvant entrer dans la constitution des symboles R''' et R '''', on peut citer : les radicaux alkylènes linéaires ou ramifiés en C₁-C₁₈, éventuellement prolongés par 1 à 5 groupes bivalents éthylène amine, par 1 à 50 groupes oxyde d'alkylène en C₁-C₃, ou par un groupe 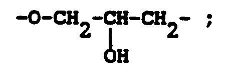
les radicaux polyoxyalkylènes contenant de 1 à 50 chaînons oxyalkylène en C₁-C₃.

A titre d'exemple de radicaux bivalents, on peut citer :
-CH₂- ; (̵CH₂)̵₂ ; (̵CH₂)̵₃ ; 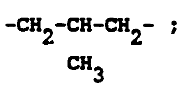
(̵CH₂)̵₁₀ ; (̵CH₂)̵₁₂ ; (̵CH₂)̵₃NH-CH₂-CH₂- ; (̵CH₂)₃-OCH₂- ; (̵CH₂)̵₃(̵OCH₂-CH₂)̵₂₉ ; (̵CH₂)̵₃⁅O-CH₂-CH(CH₃)̵]₁₅ ; 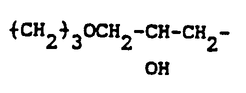
Parmi les groupes éthyléniquement insaturés X, on peut citer notamment les radicaux acrylyloxy et méthacrylyloxy.

Parmi les groupes fonctionnels X' on peut citer les groupements epoxy, hydroxy, carboxy, aldehyde, ester, acetoester, amino...

Parmi les organopolysiloxanes éthyléniquement insaturés préférentiels, on peut citer ceux à fonctions acrylate ou méthacrylate tel que ceux décrits dans la demande de brevet européen publiée sous le n^{o} 281.718, les brevets américains n^{o} 4.293.678 ; 4.139.548 ; 4.558.082 ; 4.663.185 ; 4.640.967.

Les quantités respectives de tronc et de greffons entrant dans la composition des polymères modifiés faisant l'objet de l'invention correspondent à :
- 2 à 60 % en poids, de préférence 10 à 50 % en poids par rapport au polymère modifié, de polyester sulfoné hydrodispersable
- de 0,05 à 30 % en poids, de préférence 0,5 à 10 % en poids par rapport au polymère modifié, d'organopolysiloxane éthyléniquement insaturé
- et complément à 100 %, de motifs dérivés de monomère(s) vinylique(s).

Les quantités relatives des différents motifs du tronc et des greffons sont fonction des propriétés désirées dudit polymère modifié: température de transition vitreuse, dureté, hydrophilie, allongement, résistance à la rupture, anti-adhérence...

Si des produits hydrodispersables à pH alcalin sont désirés il sera préférable d'avoir des motifs dérivés d'une composition monomère vinylique contenant plus de 5 % de son poids, et généralement de l'ordre de 7 à 11 % de son poids d'acide carboxylique éthyléniquement insaturé, et une quantité de motifs organopolysiloxanes inférieurs à 30 % du poids total du polymère modifié.

Les polymères modifiés faisant l'objet de l'invention, peuvent être préparés par :
- préémulsion dans l'eau d'une solution d'organopolysiloxane dans le ou les monomère(s) vinylique(s)
- puis addition de l'émulsion obtenue à une solution aqueuse de polyester sulfoné hydrodispersable et polymérisation en présence d'un amorceur hydrosoluble ou hydrodispersable.

Si désiré les particules de polymère modifié obtenu sont séparées du milieu aqueux.

Les quantités de réactifs mises en oeuvre correspondent à :
- 2 à 60 % en poids, de préférence 10 à 50 % en poids par rapport au poids total de monomères et de polymères mis en oeuvre, de polyester sulfoné hydrodispersable
- 0,05 à 30 % en poids, de préférence 0,5 à 10 % en poids par rapport au poids total de monomères et de polymères mis en oeuvre, d'organopolysiloxane éthyléniquement insaturé
- avec complément à 100 % à l'aide de monomère(s) vinylique(s)
- 0,01 à 4 %, de préférence de 0,05 à 2 % en poids par rapport au poids total de monomères et de polymères mis en oeuvre, d'amorceur hydrosoluble ou hydrodispersable.

L'étape de préémulsion dans l'eau de la solution d'organopolysiloxane dans le(s) monomère(s) vinylique(s) peut être réalisée avec un rapport pondéral monomère(s) vinylique(s) + organopolysiloxane / eau de l'ordre de 1/5 à 5/1, généralement de l'ordre de 1/3 à 3/1.

Les agents émulsifiants pouvant être mis en oeuvre sont des agents anioniques classiques représentés notamment par les sels d'acides gras, les alkylsulfates, les alkylsulfonates, les alkylarylsulfonates, les sulfosuccinates, les alkylphosphates de métaux alcalins, les sels de l'acide abiétique hydrogénés ou non, des agents non-ioniques tels que les alcools gras polyéthoxylés, les alkylphénols polyéthoxylés, les alkylphénols polyethoxylés sulfatés, les acides gras polyéthoxylés...

Ils peuvent être utilisés à raison de 0,1 à 3 % en poids par rapport au poids total de monomère(s) vinylique(s), d'organopolysiloxane et de polyester sulfoné (c'est-à-dire de monomère(s) vinylique(s) et de polymères).

Une variante de l'étape de préémulsion consiste à réaliser cette étape en présence d'un amorceur organosoluble. A titre d'exemple, on peut citer les peroxydes organiques comme le péroxyde de lauroyle, de benzoyle, de tert-butyle.. ; les azonitriles comme l'azobis-isobutyronitrile... L'étape de préémulsion est alors réalisée en présence de 0,1 à 3 %, en poids par rapport au poids total de monomère(s) vinylique(s) + polymères, d'un amorceur organosoluble.

Une autre variante de réalisation de l'étape de préémulsion consiste à mettre en oeuvre à cette étape une fraction du polyester sulfoné hydrodispersable, par exemple jusqu'à 50 % en poids du poids total de polyester sulfoné hydrodispersable.

L'étape de préémulsion est favorablement réalisé par homogénéisation.

L'étape de polymérisation après addition de l'émulsion à une solution aqueuse de polyester sulfoné hydrodispersable est réalisée en présence d'un amorceur hydrosoluble ou hydrodispersable comme par exemple les hydropéroxydes tels que de l'eau oxygénée, l'hydropéroxyde de cumène, l'hydropéroxyde de tertiobutyle, l'hydropéroxyde de diisopropylbenzène et les persulfates tels que le persulfate de sodium, le persulfate de potassium, le persulfate d'ammonium.

Ces amorceurs sont éventuellement associés à un réducteur, tel que les bisulfite ou le formaldehydesulfoxylate de sodium, les polyéthylèneamines, les sucres : dextrose, saccharose, les sels métalliques. Les quantités de réducteur utilisées varient de 0 à 3 % en poids par rapport au poids de la composition monomère(s) + polymères.

Des agents limitateurs de chaine peuvent éventuellement être présents dans des proportions allant de 0 à 3 % en poids par rapport à la composition monomère + polymères. Ils sont généralement choisis parmi les mercaptans tels que le N-dodécylmercaptan, le tertiododécyl mercaptan ; le cyclohexène ; les hydrocarbures halogénés tels que le chloroforme, le bromoforme, le tetrachlorure de carbone, le tétrabromure de carbone ; les dimères de l'α méthylstyrène.

Si nécessaire une quantité supplémentaire d'agents émulsifiants peuvent être mise en oeuvre.

L'opération de polymérisation est réalisée à une température fonction de celle de décomposition de l'amorceur ; cette opération se déroule généralement à une température de l'ordre de 60 à 80°C, de préférence de l'ordre de 75°C.

Si désiré le latex obtenu, qui renferme généralement de l'ordre de 10 à 40 % du poids de polymère modifié, peut être atomisé pour être stocké et véhiculé plus facilement.

Les polymères modifiés à base de polyester greffé présentent à la fois des propriétés d'adhérence et d'anti-adhérence.

Ils peuvent être utilisés comme agents de revêtement (peinture anti-incrustation, résistante à l'eau), d'ensimage, de lubrification...

Les exemples suivants sont donnés à titre indicatif et ne peuvent être considérés comme une limite du domaine et de l'esprit de l'invention.

### EXEMPLE 1

### Préémulsion

Dans un becher de 1 l on mélange
- 112 g de méthacrylate de méthyle
- 44 g d'acrylate de butyle
- et 4 g d'acide méthacrylique
On ajoute sous agitation :
- 40 g d'une huile organopolysiloxane insaturée de formule moyenne 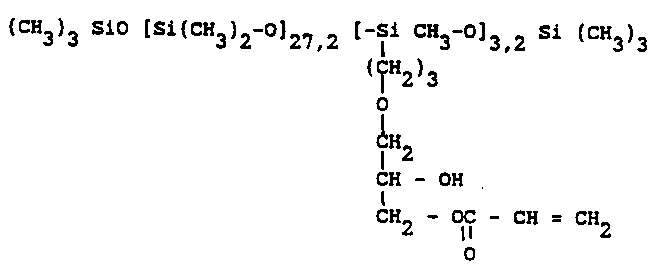
- 0,2 g de peroxyde de lauroyle.

Le milieu est laissé sous agitation jusqu'à complète dissolution.

Dans un becher on mélange 80 g d'eau, 2 g de solution aqueuse à 40,7 % en poids de nonylphénol éthoxylé partiellement sulfaté contenant 25 motifs d'oxyde d'éthylène, 3 g d'une solution aqueuse de dodecylbenzenesulfonate de sodium à 20 % en poids, et 60 mg d'acide éthylenediaminotetracetique (E.D.T.A.).

On introduit dans cette solution et sous agitation le mélange monomères acryliques / diorganopolysiloxane. Le mélange obtenu est émulsifié à l'aide d'un homogénéiseur de type ULTRA-TURAX (commercialisé par PROLABO) pendant 5 minutes à 20000 tours/minute.

### Polymérisation

Dans un ballon d'un litre on introduit :
- 360 g d'eau
- 1 g de solution aqueuse à 40,7 % en poids de nonylphénol éthoxylé partiellement sulfaté à 25 motifs oxyde d'éthylène
- 2 g de solution aqueuse à 20 % en poids de dodecylbenzène sulfonate de sodium
- 40 mg d'E.D.T.A.
- 152 g d'une solution aqueuse à 26,4 % de GEROL PS 20® (polyester sulfoné hydrodispersable commercialisé par RHONE-POULENC), ce qui correspond à 40 g de produit sec.

Le milieu étant porté à 75°C sous agitation on ajoute 0,8 g de persulfate d'ammonium dissous dans 10 ml d'eau puis on introduit la préémulsion sur 3 heures.

On reste encore 1 heure à 75°C en fin d'introduction puis on revient à température ambiante.

On obtient un latex à 28 % d'extrait sec.

### EXEMPLE 2

### Préémulsion

Dans un becher de 1 l on mélange
- 120 g d'acétate de vinyle
- 44 g d'acrylate de butyle
- et 20 g d'acide acrylique
On ajoute sous agitation :
- 40 g de l'huile silicone de l'exemple 1
- 0,2 g de peroxyde de lauroyle
Le milieu est laissé sous agitation jusqu'à complète dissolution.

Dans un becher on mélange 80 g d'eau, 2 g de solution aqueuse à 40,7 % en poids de nonylphénol éthoxylé partiellement sulfaté contenant 25 motifs d'oxyde d'éthylène, 3 g d'une solution aqueuse de dodecylbenzenesulfonate de sodium à 20 % en poids, et 60 mg d'acide éthylenediaminotetracetique (E.D.T.A.).

On introduit dans cette solution et sous agitation le mélange monomères acryliques / diorganopolysiloxane. Le mélange obtenu est émulsifié à l'aide d'un homogénéiseur de type ULTRA-TURAX (commercialisé par PROLABO) pendant 5 minutes à 20000 tours/minute.

### Polymérisation

Dans un ballon d'un litre on introduit :
- 360 g d'eau
- 1 g de solution aqueuse à 40,7 % en poids de nonylphénol éthoxylé partiellement sulfaté à 25 motifs oxyde d'éthylène
- 2 g de solution aqueuse à 20 % en poids de dodecylbenzène sulfonate de sodium
- 40 mg d'E.D.T.A.
- 50,5 g d'une solution aqueuse à 27,7 % de GEROL PS 20® (polyester sulfoné hydrodispersable commercialisé par RHONE-POULENC), ce qui correspond à 14 g de produit sec.

Le milieu étant porté à 75°C sous agitation on ajoute 0,8 g de persulfate d'ammonium dissous dans 10 ml d'eau puis on introduit la préémulsion sur 3 heures.

On reste encore 1 heure à 75°C en fin d'introduction puis on revient à température ambiante.

On obtient un latex à 27 % d'extrait sec, qui est alcali-soluble.

On introduit dans un bécher 50 g de ce latex auquel on ajoute 400 g d'eau ; l'extrait sec est alors de 3 % en poids.

On porte le milieu à 60°C sous agitation puis on ajoute une solution d'ammoniaque à 20 % en poids pour amener le pH à une valeur de 8.

On passe alors d'une dispersion à une solution (ou pseudo solution) de polymère modifié.

### EXEMPLE 3

On répète l'opération décrite à l'exemple 1 à partir des réactifs et quantités de réactifs suivants :

### Préémulsion

- 100 g de méthacrylate de méthyle
- 56 g d'acrylate d'éthyle
- 9 g d'acide acrylique
- 35 g d'une huile silicone de formule 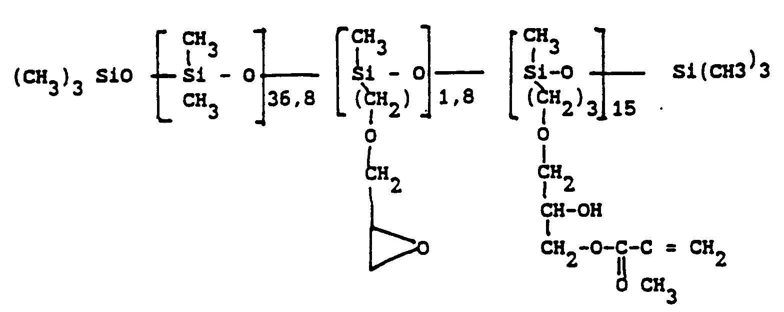
- 0,1 g de péroxyde de lauroyle

### Polymérisation

- 350g g d'eau
- 100 g d'une solution aqueuse à 25 % de GEROL PS 30® (polyester sulfoné hydrodispersable commercialisé par RHONE-POULENC), ce qui correspond à 25 g de produit sec
- 0,6 g de persulfate d'ammonium.

On obtient un latex à 30 % d'extrait sec

### EXEMPLE 4

On répète l'opération décrite à l'exemple 1 à partir des réactifs et quantités de réactifs suivants :

### Préémulsion

- 150 g de méthacrylate de méthyle
- 30 g d'acrylate d'éthyle
- 20 g d'acrylate de butyle
- 20 g d'acide méthacrylique
- 7 g d'une huile silicone de formule 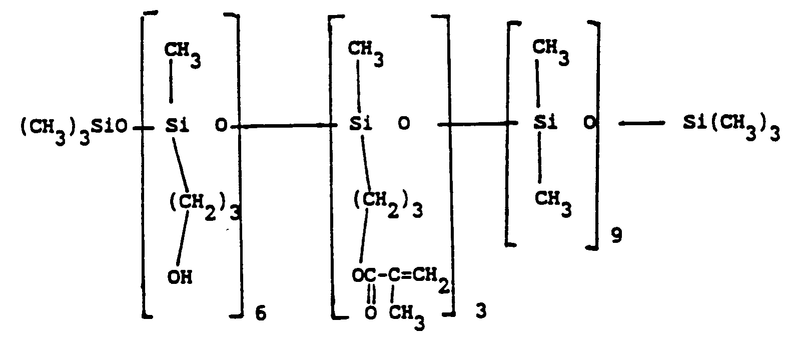
- 0,2 g de péroxyde de lauroyle.

### Polymérisation

- 300 g d'eau
- 50 g d'une solution aqueuse à 25 % de GEROL PHS® (polyester sulfoné hydrodispersable commercialisé par RHONE-POULENC), ce qui correspond à 12,5 g de produit sec.

On obtient un latex à 35 % d'extrait sec.

### EXEMPLE 5

On répète l'opération décrite à l'exemple 2 à partir des réactifs et quantités de réactifs suivants :

### Préémulsion

- 130 g d'acétate de vinyle
- 45 g d'acrylate de butyle
- 5 g d'acide acrylique
- 20 g d'acide méthacrylique
- 40 g d'une huile silicone de formule 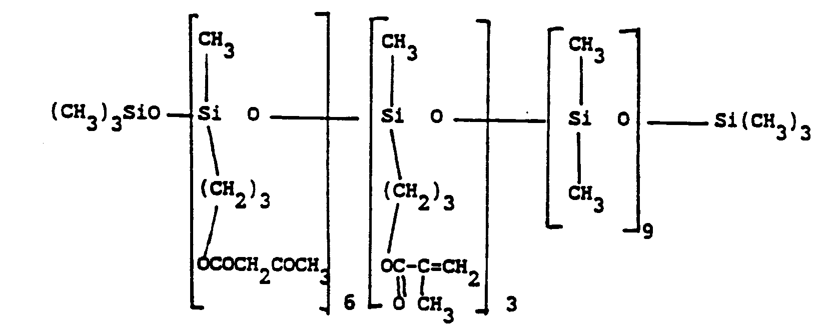
- 0,2 g de péroxyde de lauroyle.

### Polymérisation : inchangée

On obtient un latex à 27 % d'extrait sec.

## Revendications

1. Polymères modifiés à base d'un polyester greffé comprenant :
- un tronc dérivé d'un polyester sulfoné hydrodispersable
- et des greffons constitués de motifs copolymères dérivés d'au moins un monomère vinylique et d'au moins un organopolysiloxane éthyléniquement insaturé soluble dans ledit ou lesdits monomère(s) vinylique(s).

2. Polymères modifiés selon la revendication 1 caractérisés en ce que les quantités respectives de tronc et de greffons correspondent à :
- 2 à 60 % en poids par rapport au polymère modifié, de polyester sulfoné hydrodispersable
- de 0,05 à 30 % en poids par rapport au polymère modifié, d'organopolysiloxane éthyléniquement insaturé
- et complément à 100 %, de motifs dérivés de monomère(s) vinylique(s).

3. Polymères selon la revendication 2 caractérisés en ce que les quantités respectives de tronc et de greffons correspondent à
- 10 à 50 % en poids par rapport au polymère modifié, de polyester sulfoné hydrodispersable
- 0,5 à 10 % en poids par rapport au polymère modifié, d'organopolysiloxane éthyléniquement insaturé
- et complément à 100 %, de motifs dérivés de monomère(s) vinylique(s).

4. Polyesters modifiés selon l'une quelconque des revendications précédentes caractérisés en ce que le polyester sulfoné hydrodispersable présente une masse moléculaire moyenne en nombre comprise entre 10.000 et 35.000, un indice d'acide inférieur à 5 mg de KOH/g, un taux de soufre compris entre 0,8 et 2 % en poids.

5. Polymères modifiés selon l'une quelconque des revendications précédentes caractérisés en ce que l'organopolysiloxane dont dérivent les greffons sont représentés par la formule :
R''R'RSiO (SIRR'''O)ₘ (SiRR''''O)ₙ SiRR'R''
formule dans laquelle
. les symboles R sont identiques ou différents et représentent un radical alkyle en C₁-C₄, phényle, trifluoro-3, 3, 3 propyle
. les symboles R' sont identiques ou différents et représentent R ou un radical vinyle
. les symboles R'' sont identiques ou différents et représentent R ou un radical OH
. les symboles R''' sont identiques ou différents et représentent R, un radical vinyle ou un motif -r-X où r représente un radical organique bivalent et X un groupe éthyléniquement insaturé
. les symboles R'''' sont identiques ou différents et représentent R''' ou un motif -r' -X' où r' représente un radical organique bivalent et X' un groupe fonctionnel non éthyléniquement insaturé
. au moins 60 % des radicaux représentés par R, R' et R'' sont des radicaux méthyles
. les symboles m et n peuvent être nuls séparément, R' et/ou R'''' représentant un radical vinyle si m est nul, et ont une valeur suffisante pour assurer une viscosité du polymère de l'ordre de 20 mPas à 10.000.000 mPas à 25°C.

6. Polymères modifiés selon l'une quelconque des revendications précédentes caractérisés en ce que les monomères vinyliques dont dérivent les greffons sont les esters monoéthyléniquement insaturés d'acides carboxyliques, les esters saturés et amides d'acides carboxyliques monoéthyléniquement insaturés, les nitriles monoéthyléniquement insaturés, les hydroxyalkyl ou aminoalkylesters d'acides carboxyliques monoéthyléniquement insaturés, les monomères vinylaromatiques.

7. Procédé de préparation de polymères modifiés caractérisé par les étapes suivantes :
- préémulsion dans l'eau d'une solution d'un organopolysiloxane dans un ou des monomère(s) vinylique(s)
- puis addition de l'émulsion obtenue à une solution aqueuse d'un polyester sulfoné hydrodispersable et polymérisation en présence d'un amorceur hydrosoluble ou hydrodispersable.

8. Procédé selon la revendication 7 caractérisé en ce que les quantités de réactifs mises en oeuvre correspondent à :
- 2 à 60 % en poids par rapport au poids total de monomères vinyliques et de polymères mis en oeuvre, de polyester sulfoné hydrodispersable
- 0,05 à 30 % en poids par rapport au poids total de monomères vinyliques et de polymères mis en oeuvre, d'organopolysiloxane éthyléniquement insaturé
- avec complément à 100 % à l'aide de monomère(s) vinylique(s)
- 0,01 à 4 % en poids par rapport au poids total de monomères vinyliques et de polymères mis en oeuvre, d'amorceur hydrosoluble ou hydrodispersable.

9. Procédé selon la revendication 8 caractérisé en ce que les quantités de réactifs mises en oeuvre correspondent à :
- 10 à 50 % en poids par rapport au poids total de monomères vinyliques et de polymères mis en oeuvre, de polyester sulfoné hydrodispersable
- 0,5 à 10 % en poids par rapport au poids total de monomères vinyliques et de polymères mis en oeuvre, d'organopolysiloxane éthyléniquement insaturé
- avec complément à 100 % à l'aide de monomère(s) vinylique(s)
- 0,05 à 2 % en poids par rapport au poids total de monomères vinyliques et de polymères mis en oeuvre, d'amorceur hydrosoluble ou hydrodispersable.

10. Procédé selon l'une quelconque des revendications 7 à 9 caractérisé l'étape de préémulsion est réalisée à l'aide d'une quantité de réactifs correspondant à un rapport pondéral monomère(s) vinylique(s) + organopolysiloxane / eau de l'ordre de 1/5 à 5/1.

11. Procédé selon l'une quelconque des revendications 7 à 10 caractérisé en ce que l'étape de préémulsion est réalisée en présence de 0,1 à 3 % en poids par rapport au poids total de monomère(s) vinylique(s) + polymères, d'un amorceur organosoluble.

12. Procédé selon l'une quelconque des revendications 7 à 11 caractérisé en ce que l'organopolysiloxane a pour formule
R''R'RSiO (SiRR'''O)ₘ (SiRR''''O)ₙ SiRR'R''
formule dans laquelle
. les symboles R sont identiques ou différents et représentent un radical alkyle en C₁-C₄, phényle, trifluoro-3, 3, 3 propyle
. les symboles R' sont identiques ou différents et représentent R ou un radical vinyle
. les symboles R'' sont identiques ou différents et représentent R ou un radical OH
. les symboles R''' sont identiques ou différents et représentent R, un radical vinyle ou un motif -r-X où r représente un radical organique bivalent et X un groupe éthyléniquement insaturé
. les symboles R'''' sont identiques ou différents et représentent R''' ou un motif -r'-X' où r' représente un radical organique bivalent et X' un groupe fonctionnel non éthyléniquement insaturé
. au moins 60 % des radicaux représentés par R, R' et R'' sont des radicaux méthyles
. les symboles m et n peuvent être nuls séparément, R' et/ou R'''' représentant un radical vinyle si m est nul, et ont une valeur suffisante pour assurer une viscosité du polymère de l'ordre de 20 mPas à 10.000.000 mPas à 25°C.

13. Procédé selon l'une quelconque des revendications 7 à 12 caractérisé en ce que les monomères vinyliques sont les esters monoéthyléniquement insaturés d'acides carboxyliques, les esters saturés et amides d'acides carboxyliques monoéthyléniquement insaturés, les nitriles monoéthyléniquement insaturés, les hydroxyalkyl ou aminoalkylesters d'acides carboxyliques monoéthyléniquement insaturés, les monomères vinylaromatiques.

14. Procédé selon l'une quelconque des revendications 7 à 13 caractérisé en ce que le polyester sulfoné hydrodispersable présente une masse moléculaire moyenne en nombre comprise entre 10.000 et 35.000, un indice d'acide inférieur à 5 mg de KOH/g, un taux de soufre compris entre 0,8 et 2 % en poids.

15. Application du polymère faisant l'objet des revendications 1 à 6 comme agents de revêtement.

## Claims

1. Modified polymers based on a graft polyester comprising:
- a backbone derived from a water-dispersible sulphonated polyester
- and grafts consisting of copolymer units derived from at least one vinyl monomer and at least one ethylenically unsaturated organopolysiloxane soluble in the said vinyl monomer or monomers.

2. Modified polymers according to Claim 1, characterized in that the respective quantities of backbone and grafts correspond to:
- 2 to 60 % by weight, relative to the modified polymer, of water-dispersible sulphonated polyester
- from 0.05 to 30 % by weight, relative to the modified polymer, of ethylenically unsaturated organopolysiloxane
- and, making up to 100 %, units derived from vinyl monomer(s).

3. Polymers according to Claim 2, characterized in that the respective quantities of backbone and grafts correspond to
- 10 to 50 % by weight, relative to the modified polymer, of water-dispersible sulphonated polyester
- 0.5 to 10 % by weight, relative to the modified polymer, of ethylenically unsaturated organopolysiloxane
- and, making up to 100 %, units derived from vinyl monomer(s).

4. Modified polyesters according to any one of the preceding claims, characterized in that the water-dispersible sulphonated polyester has a number-average molecular mass of between 10,000 and 35,000, an acid number of less than 5 mg of KOH/g and a sulphur content of between 0.8 and 2 % by weight.

5. Modified polymers according to any one of the preceding claims, characterized in that the organopolysiloxane from which the grafts are derived is represented by the formula:
R''R'RSiO (SiRR'''O)ₘ (SiRR''''O)ₙ SiRR'R''
in which formula
the symbols R are identical or different and represent a C₁-C₄ alkyl radical, phenyl or 3,3,3-trifluoropropyl
the symbols R' are identical or different and represent R or a vinyl radical
the symbols R'' are identical or different and represent R or a radical OH
the symbols R''' are identical or different and represent R, a vinyl radical or a -r-X unit in which r represents a divalent organic radical and X an ethylenically unsaturated group
the symbols R'''' are identical or different and represent R''' or a -r'-X' unit in which r' represents a divalent organic radical and X' a functional group which is not ethylenically unsaturated
at least 60 % of the radicals represented by R, R' and R'' are methyl radicals, and
the symbols m and n can separately be zero, R' and/or R'''' representing a vinyl radical if m is zero, and have a value sufficient to ensure a viscosity of the polymer of the order of 20 mPa.s to 10,000,000 mPa.s at 25°C.

6. Modified polymers according to any one of the preceding claims, characterized in that the vinyl monomers from which the grafts are derived are monoethylenically unsaturated esters of carboxylic acids, saturated esters and amides of monoethylenically unsaturated carboxylic acids, monoethylenically unsaturated nitriles, hydroxyalkyl or aminoalkyl esters of monoethylenically unsaturated carboxylic acids or vinylaromatic monomers.

7. Process for the preparation of modified polymers, characterized by the following steps:
- preemulsion, in water, of a solution of an organopolysiloxane in one or more vinyl monomers
- followed by addition of the emulsion obtained to an aqueous solution of a water-dispersible sulphonated polyester and polymerization in the presence of a water-soluble or water-dispersible initiator.

8. Process according to Claim 7, characterized in that the quantities of reactants used correspond to:
- 2 to 60 % by weight, relative to the total weight of vinyl monomers and polymers used, of water-dispersible sulphonated polyester
- 0.05 to 30 % by weight, relative to the total weight of vinyl monomers and polymers used, of ethylenically unsaturated organopolysiloxane
- making up to 100 % with vinyl monomer or monomers
- 0.01 to 4 % by weight, relative to the total weight of vinyl monomers and polymers used, of water-soluble or water-dispersible initiator.

9. Process according to Claim 8, characterized in that the quantities of reactants used correspond to:
- 10 to 50 % by weight, relative to the total weight of vinyl monomers and polymers used, of water-dispersible sulphonated polyester
- 0.5 to 10 % by weight, relative to the total weight of vinyl monomers and polymers used, of ethylenically unsaturated organopolysiloxane
- making up to 100 % with vinyl monomer or monomers
- 0.05 to 2 % by weight, relative to the total weight of vinyl monomers and polymers used, of water-soluble or water-dispersible initiator.

10. Process according to any one of Claims 7 to 9, characterized in that the preemulsion step is carried out using a quantity of reactants corresponding to a weight ratio of vinyl monomer or monomers + organopolysiloxane/water of the order of 1/5 to 5/1.

11. Process according to any one of Claims 7 to 10, characterized in that the preemulsion step is carried out in the presence of 0.1 to 3 % by weight, relative to the total weight of vinyl monomer or monomers + polymers, of an organosoluble initiator.

12. Process according to any one of Claims 7 to 11, characterized in that the organopolysiloxane has the formula
R''R'RSiO (SiRR'''O)ₘ (SiRR''''O)ₙ SiRR'R''
in which formula
the symbols R are identical or different and represent a C₁-C₄ alkyl radical, phenyl or 3,3,3-trifluoropropyl
the symbols R' are identical or different and represent R or a vinyl radical
the symbols R'' are identical or different and represent R or a radical OH
the symbols R''' are identical or different and represent R, a vinyl radical or a -r-X unit in which r represents a divalent organic radical and X represents an ethylenically unsaturated group
the symbols R'''' are identical or different and represent R''' or a -r'-X' unit in which r' represents a divalent organic radical and X' represents a functional group which is not ethylenically unsaturated
at least 60 % of the radicals represented by R, R' and R'' are methyl radicals, and
the symbols m and n can separately be zero, R' and/or R'''' representing a vinyl radical if m is zero, and have a value sufficient to ensure a viscosity of the polymer of the order of 20 mPa.s to 10,000,000 mPa.s at 25°C.

13. Process according to any one of Claims 7 to 12, characterized in that the vinyl monomers are monoethylenically unsaturated esters of carboxylic acids, saturated esters and amides of monoethylenically unsaturated carboxylic acids, monoethylenically unsaturated nitriles, hydroxyalkyl or aminoalkyl esters of monoethylenically unsaturated carboxylic acids or vinylaromatic monomers.

14. Process according to any one of Claims 7 to 13, characterized in that the water-dispersible sulphonated polyester has a number-average molecular mass of between 10,000 and 35,000, an acid number of less than 5 mg of KOH/g and a sulphur content of between 0.8 and 2 % by weight.

15. Use of the polymer which is the subject of Claims 1 to 6 as coating agents.

## Patentansprüche

1. Modifizierte Polymere auf der Basis eines gepfropften Polyesters, umfassend:
- eine Hauptkette, abgeleitet von einem wasserdispergierbaren sulfonierten Polyester
- und aufgepfropfte Seitenketten aus Copolymereinheiten, abgeleitet von mindestens einem Vinylmonomeren und mindestens einem ethylenisch ungesättigten Organopolysiloxan, das in dem oder den Vinylmonomeren löslich ist.

2. Modifizierte Polymere nach Anspruch 1, dadurch **gekennzeichnet,** daß die jeweiligen Mengen der Hauptkette und der aufgepfropften Seitenketten wie folgt sind:
- 2 bis 60 Gew.-%, bezogen auf das modifizierte Polymere, an wasserdispergierbarem sulfoniertem Polyester
- 0,05 bis 30 Gew.-%, bezogen auf das modifizierte Polymere, an ethylenisch ungesättigtem Organopolysiloxan
- und auf 100% von dem Vinylmonomeren bzw. den Vinylmonomeren abgeleitete Gruppierungen.

3. Modifizierte Polymere nach Anspruch 2, dadurch **gekennzeichnet,** daß die jeweiligen Mengen der Hauptkette und der aufgepfropften Seitenketten wie folgt sind:
- 10 bis 50 Gew.-%, bezogen auf das modifizierte Polymere, an wasserdispergierbarem sulfoniertem Polyester
- 0,5 bis 10 Gew.-%, bezogen auf das modifizierte Polymere, an ethylenisch ungesättigtem Organopolysiloxan
- und auf 100% von dem Vinylmonomeren bzw. den Vinylmonomeren abgeleitete Gruppierungen.

4. Modifizierte Polyester nach einem der vorausgehenden Ansprüche, dadurch **gekennzeichnet**, daß der wasserdispergierbare sulfonierte Polyester ein zahlenmäßiges mittleres Molekulargewicht zwischen 10.000 und 35.000, eine Säurezahl unter 5 mg KOH/g, einen Schwefelgehalt zwischen 0,8 und 2 Gew.-% besitzt.

5. Modifizierte Polymere nach einem der vorausgehenden Ansprüche, dadurch **gekennzeichnet,** daß das Organopolysiloxan, von dem sich die aufgepfropften Seitenketten ableiten, durch die Formel
R''R'RSiO (SiRR'''O)ₘ (SiRR''''O)ₙ SiRR'R''
wiedergegeben wird, worin
. die Symbole R gleich oder verschieden sind und für einen C₁-C₄-Alkylrest, Phenylrest, 3,3,3-Trifluorpropylrest stehen.
. die Symbole R' gleich oder verschieden sind und für R oder einen Vinylrest stehen
. die Symbole R'' gleich oder verschieden sind und für R oder eine OH-Gruppe stehen
. die Symbole R''' gleich oder verschieden sind und für R, einen Vinylrest oder eine Gruppierung -r-X, worin r für einen zweiwertigen organischen Rest und X für eine ethylenisch ungesättigte Gruppe stehen, stehen
. die Symbole R'''' gleich oder verschieden sind und für R''' oder eine Gruppierung -r'-X', worin r' für einen zweiwertigen organischen Rest und X' für eine nichtethylenisch ungesättigte funktionelle Gruppe steht, stehen
. mindestens 60% der durch R, R' und R'' angegebenen Reste Methylreste sind
. die Symbole m und n getrennt voneinander den Wert Null haben können, wobei R' und/oder R'''' für einen Vinylrest steht, wenn m den Wert Null hat, und einen Wert besitzen, der ausreicht, dem Polymeren eine Viskosität im Bereich von 20 mPas bis 10.000.000 mPas bei 25°C zu verleihen.

6. Modifizierte Polymere nach einem der vorausgehenden Ansprüche, dadurch **gekennzeichnet,** daß die Vinylmonomeren, von denen sich die aufgepfropften Seitenketten ableiten, monoethylenisch ungesättigte Ester von Carbonsäuren, gesättigte Ester und Amide von monoethylenisch ungesättigten Carbonsäuren, monoethylenisch ungesättigte Nitrile, Hydroxyalkyl- oder Aminoalkylester von monoethylenisch ungesättigten Carbonsäuren, vinylaromatische Monomere sind.

7. Verfahren zur Herstellung von modifizierten Polymeren, **gekennzeichnet** durch die folgenden Stufen:
- Voremulgierung einer Lösung eines Organopolysiloxans in dem oder den Vinylmonomeren in Wasser
- anschließende Zugabe der so erhaltenen Emulsion zu einer wäßrigen Lösung eines wasserdispergierbaren sulfonierten Polyesters und Polymerisation in Gegenwart eines wasserlöslichen oder wasserdispergierbaren Starters.

8. Verfahren nach Anspruch 7, dadurch **gekennzeichnet,** daß die folgenden Mengen an Reagentien eingesetzt werden:
- 2 bis 60 Gew.-%, bezogen auf das Gesamtgewicht der verwendeten Vinylmonomeren und der Polymeren, an wasserdispergierbarem sulfoniertem Polyester
- 0,05 bis 30 Gew.-%, bezogen auf das Gesamtgewicht der verwendeten Vinylmonomeren und der Polymeren, an ethylenisch ungesättigtem Organopolysiloxan
- Ergänzung auf 100% mit Hilfe von Vinylmonomeren
- 0,01 bis 4 Gew.-%, bezogen auf das Gesamtgewicht der verwendeten Vinylmonomeren und der Polymeren, eines wasserlöslichen oder wasserdispergierbaren Starters.

9. Verfahren nach Anspruch 8, dadurch **gekennzeichnet,** daß die folgenden Mengen an Reagentien eingesetzt werden:
- 10 bis 50 Gew.-%, bezogen auf das Gesamtgewicht der verwendeten Vinylmonomeren und der Polymeren, an wasserdispergierbarem sulfoniertem Polyester
- 0,5 bis 10 Gew.-%, bezogen auf das Gesamtgewicht der verwendeten Vinylmonomeren und der Polymeren, an ethylenisch ungesättigtem Organopolysiloxan
- Ergänzung auf 100% mit Hilfe von Vinylmonomeren
- 0,05 bis 2 Gew.-%, bezogen auf das Gesamtgewicht der verwendeten Vinylmonomeren und der Polymeren, eines wasserlöslichen oder wasserdispergierbaren Starters.

10. Verfahren nach einem der Ansprüche 7 bis 9, dadurch **gekennzeichnet,** daß die Stufe der Voremulgierung mit Hilfe einer Menge an Reagentien entsprechend einem Gewichtsverhältnis Vinylmonomer(en) + Organopolysiloxan/Wasser im Bereich von 1/5 bis 5/1 durchgeführt wird.

11. Verfahren nach einem der Ansprüche 7 bis 10, dadurch **gekennzeichnet,** daß die Stufe der Voremulgierung in Gegenwart von 0,1 bis 3 Gew.-%, bezogen auf das Gesamtgewicht an Vinylmonomer(en) + Polymeren, eines in einem organischen Lösungsmittel löslichen Starters durchgeführt wird

12. Verfahren nach einem der Ansprüche 7 bis 11, dadurch **gekennzeichnet,** daß das Organopolysiloxan der Formel
R''R'RSiO (SiRR'''O)ₘ (SiRR''''O)ₙ SiRR'R''
entspricht, worin
. die Symbole R gleich oder verschieden sind und für einen C₁-C₄-Alkylrest, einen Phenylrest, einen 3,3,3-Trifluorpropylrest stehen
. die Symbole R' gleich oder verschieden sind und für R oder einen Vinylrest stehen
. die Symbole R'' gleich oder verschieden sind und für R oder einen OH-Rest stehen
. die Symbole R''' gleich oder verschieden sind und für R, einen Vinylrest oder eine Gruppierung -r-X, worin r für einen zweiwertigen organischen Rest und X für eine ethylenisch ungesättigte Gruppe stehen, stehen
. die Symbole R'''' gleich oder verschieden sind und für R''' oder eine Gruppierung -r'-X', worin r' für einen zweiwertigen organischen Rest und X' für eine nichtethylenisch ungesättigte funktionelle Gruppe stehen, stehen
. mindestens 60% der durch R, R' und R'' wiedergegebenen Reste Methylreste sind
. die Symbole m und n getrennt voneinander den Wert Null haben können, wobei R' und/oder R'''' für einen Vinylrest steht, wenn m den Wert Null hat und einen Wert besitzen, der ausreicht, dem Polymeren eine Viskosität im Bereich von 20 mPas bis 10.000.000 mPas bei 25°C zu verleihen.

13. Verfahren nach einem der Ansprüche 7 bis 12, dadurch **gekennzeichnet,** daß die Vinylmonomeren monoethylenisch ungesättigte Ester von Carbonsäuren, gesättigte Ester und Amide von monoethylenisch ungesättigten Carbonsäuren, monoethylenisch ungesättigte Nitrile, Hydroxyalkyl- oder Aminoalkylester von monoethylenisch ungesättigten Carbonsäuren, vinylaromatische Monomere sind.

14. Verfahren nach einem der Ansprüche 7 bis 13, dadurch **gekennzeichnet,** daß der wasserdispergierbare sulfonierte Polyester ein zahlenmäßiges mittleres Molekulargewicht zwischen 10.000 und 35.000, eine Säurezahl unter 5 mg KOH/g, einen Schwefelgehalt zwischen 0,8 und 2 Gew.-% besitzt.

15. Verwendung des Polymeren nach den Ansprüchen 1 bis 6 als Beschichtungsmittel.
